# EUROPEAN PATENT APPLICATION

(11) **EP 4 707 097 A1**
(43) Date of publication of application: **11.03.2026**
(21) Application number: 25196198.3
(22) Date of filing: 15.08.2025
(51) Int. Cl.: B60W 20/19

(54) **ROLLING START LAUNCH CONTROL**

(30) Priority: 19.08.2024 GB 202412201
(71) Applicant: McLaren Automotive Limited, Woking, Surrey GU21 4YH (GB)
(72) Inventor: Abbattista, Angelo, Woking, GU21 4YH (GB); Arakawa, Denni Yuri, Woking, GU21 4YH (GB); Clement, Arnaud, Woking, GU21 4YH (GB)
(74) Representative: Slingsby Partners LLP

(57) **Abstract**

A vehicle comprising a plurality of wheels, a powertrain for providing torque to a drive shaft coupled to at least one of the plurality of wheels, the powertrain comprising a spark-ignited internal combustion engine for igniting a volume of combustion mixture and an electric motor, a launch control having an inactive mode during which the powertrain operates under a first set of operating conditions and an active mode during which the powertrain operates under a second set of operating conditions and a control system configured to respond to the launch control being in the active mode by commanding the powertrain to operate under the second set of operating conditions in which the electric motor outputs a negative torque and the internal combustion engine outputs an augmented torque which counteracts the negative torque output by the electric motor such that the vehicle travels at a constant speed.

## Description

### TECHNICAL FIELD

This invention relates to a vehicle powertrain.

### BACKGROUND

A focus of engineers for many years has been maximising the acceleration of vehicles such as road vehicles. This has become particularly important for performance road vehicles, for example those used in drag races.

A typical road vehicle comprises a power source, such as an internal combustion engine (ICE) that is spark-ignited to generate an engine torque. An output shaft of the engine can be coupled to a driveshaft of the vehicle (typically through a transmission) to transmit the engine-generated torque to the driveshaft to drive the wheels of the vehicle. Various methods have been developed which maximise the ability of the ICE to generate a large engine torque quickly in order to cause rapid acceleration of the vehicle.

It is desirable to develop a vehicle with which the driver of the vehicle can interact so as to select a moment at which maximum acceleration of the vehicle can be instantaneously achieved. In recent years, vehicles have been developed which feature a dual power source, for example an internal combustion engine (ICE) as well as an electric motor powered by a battery. The inventors of the present invention have developed a vehicle functionality which allows maximum vehicle acceleration to be delivered at a time selected by the driver after a rolling vehicle start.

### SUMMARY OF THE INVENTION

There is provided a vehicle comprising a plurality of wheels, a powertrain for providing torque to a drive shaft coupled to at least one of the plurality of wheels, the powertrain comprising a spark-ignited internal combustion engine for igniting a volume of combustion mixture and an electric motor, a launch control having an inactive mode during which the powertrain operates under a first set of operating conditions and an active mode during which the powertrain operates under a second set of operating conditions and a control system configured to respond to the launch control being in the active mode by commanding the powertrain to operate under the second set of operating conditions in which the electric motor outputs a negative torque and the internal combustion engine outputs an augmented torque which counteracts the negative torque output by the electric motor such that the vehicle travels at a constant speed.

The vehicle may comprise an accelerator pedal pivotable between an uppermost position and a lowermost position, the position of the accelerator pedal providing a command signal to the powertrain indicating a demanded torque, the uppermost position of the accelerator pedal providing a command signal indicating zero demanded torque and the lowermost position of the accelerator pedal providing a command signal indicating a maximum demanded torque.

The period of time during which the launch control is in the active mode may be the active period and the accelerator pedal is in the lowermost position during the active period.

The launch control may be actuatable to activate the active mode and de-activate the active mode.

The launch control may comprise any of a depressible button, a switch or a virtual control.

The second set of operating conditions may cause less efficient operation of the powertrain than the first set of operating conditions.

Operating conditions of the first set of operating conditions and the second set of operating conditions may comprise the torque output by the electric motor and the torque output by the spark-ignited internal combustion engine.

The torque provided by the powertrain during the active period may be equal to the torque provided by the powertrain immediately before the active period, and the torque provided by the powertrain may be a sum of the torque output by the spark-ignited internal combustion engine and the torque output by the electric motor

The control system may be configured to command the electric motor to reduce the torque output by the electric motor by a first torque amount in response to the launch control entering the active mode.

The control system may be configured to command the internal combustion engine to increase the torque output by the internal combustion engine by a second torque amount in response to the launch control entering the active mode.

The first torque amount may be equal to the second torque amount.

The control system may be configured to command the powertrain to increase the torque output by the electric motor and the torque output by the internal combustion engine in response to the launch control leaving the active mode.

For a given position of the accelerator pedal, the torque provided by the powertrain operating under the second set of operating conditions may be smaller than the torque provided by the powertrain operating under the first set of operating conditions.

The spark-ignited internal combustion engine may comprise at least one combustion chamber configured to receive an injection of combustion mixture comprising air and fuel and the spark-ignited internal combustion engine may be configured to ignite the combustion mixture according to an ignition timing.

The control system may be configured to command a reduction to the fuel injected into the combustion chamber in response to the launch control entering the active mode and to reverse the commanded reduction of fuel in response to the launch control leaving the active mode.

The control system may be configured to initiate a delay of the ignition timing in response to the launch control entering the active mode and to bring forward the combustion mixture ignition in response to the launch control leaving the active mode.

The vehicle may comprise an exhaust system configured to convey exhaust gases and unburnt combustion mixture from the powertrain to the exterior of the vehicle and a turbocharger comprising a turbine and a compressor configured to compress air.

The exhaust system may comprise an exhaust manifold configured to convey exhaust gases and unburnt combustion mixture from the internal combustion engine towards the turbocharger and an intake manifold configured to convey compressed air from the turbocharger into the internal combustion engine.

The internal combustion engine may be configured to expel a more energetic mixture of exhaust gases and unburnt combustion mixture into the exhaust system during the active period.

The powertrain may comprise a throttle having a variable position for controlling the flow of the combustion mixture into the intake manifold and the operating conditions may comprise the position of the throttle.

Under the second set of operating conditions, the throttle may have a more open position than the throttle position under the first set of operating conditions.

The control system may be configured to cause the throttle to adopt a more open position in response to the launch control entering the active mode and to cause the throttle to adopt a more closed position in response to the launch control leaving the active mode.

The exhaust system may comprise a turbine exhaust configured to convey exhaust gases and unburnt combustion mixture from the turbine to the exterior of the vehicle and a wastegate pipe configured to convey exhaust gases and unburnt combustion mixture from the exhaust manifold to the turbine exhaust such that the exhaust gases and unburnt combustion mixture bypass the turbine.

The wastegate pipe may comprise a wastegate valve configure to control the flow of exhaust gases and unburnt combustion mixture from the exhaust manifold to the turbine exhaust.

The operating conditions may comprise the wastegate valve position. Under the second set of operating conditions, the wastegate valve may have a more closed position than the wastegate valve position under the first set of operating conditions.

The control system is configured to cause the wastegate valve to adopt a more closed position in response to the launch control entering the active mode and to cause the wastegate valve to adopt a more open position in response to the launch control leaving the active mode.

The control system may be configured to respond to the launch control leaving the active mode by commanding both the electric motor and the internal combustion engine to output a positive torque.

There is also provided a method performed by a control system of a vehicle, the vehicle comprising a plurality of wheels, a powertrain for providing torque to a drive shaft coupled to at least one of the plurality of wheels, the powertrain comprising a spark-ignited internal combustion engine for igniting a volume of combustion mixture and an exhaust system arranged to convey exhaust gases and residual combustion mixture from the internal combustion engine, an electric motor; and a launch control having an inactive mode during which the powertrain operates under a first set of operating conditions and an active mode during which the powertrain operates under a second set of operating conditions, the method comprising receiving a first signal indicative of the launch control entering the active mode and in response to receiving the first signal, commanding the powertrain to operate under the second set of operating conditions in which the electric motor outputs a negative torque and the internal combustion engine outputs an augmented torque which counteracts the negative torque output by the electric motor such that the vehicle travels at a constant speed.

The method may comprise receiving a second signal indicative of the launch control leaving the active mode and in response to receiving the second signal, commanding the powertrain to operate under the first set of operating conditions and commanding both the electric motor and the internal combustion engine to output a positive torque.

### BRIEF DESCRIPTION OF THE DRAWINGS

Figure 1 shows a schematic drawing of a vehicle.
Figure 2 shows a graph of vehicle speed against time.
Figure 3 shows a graph of powertrain torque against time.
Figure 4 shows an internal combustion engine of a vehicle.
Figure 5 shows an internal combustion engine and a turbocharger.
Figure 6 shows a graph of spark timing retardation.
Figure 7 shows a graph of boost pressure against time.
Figure 8 shows a graph of a fuel cut command against time.

### DETAILED DESCRIPTION OF THE DRAWINGS

The following description is presented to enable any person skilled in the art to make and use the invention and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

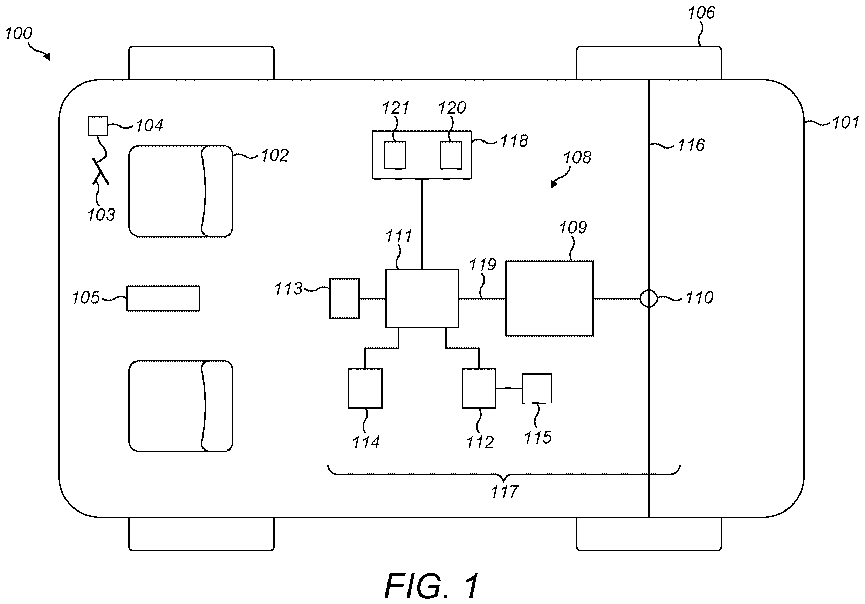

Figure 1 illustrates a vehicle 100. The vehicle 100 has a vehicle body 101. The vehicle 100 seen in figure 1 has four drive wheels 106. At least one of those wheels is typically driven by a power source. In the example seen in figure 1, the power source is formed of a spark-ignited internal combustion engine (ICE) 111 and an electric motor 112. The vehicle 100 may be known as a hybrid vehicle. The drive wheels 106 can be coupled to the power source by a drivetrain 108. The drivetrain 108 includes a crankshaft 119 and a driveshaft 116. This drivetrain will generally comprise a gearbox 109 to permit the drive wheels 106 to be driven at a range of speeds greater than the standard speed range of the power source. The gearbox 109 generally comprises a clutch or clutches to releasably couple the crankshaft 119 to the driveshaft 116. In this way drive from the ICE 111 and the electric motor 112 can be provided to or disabled from being transmitted to the driveshaft 116. The gearbox 109 couples the crankshaft 119 of the engine to a driveshaft 116 for driving the wheels of the vehicle. The electric motor 112 may also be coupled to the crankshaft 19. The electric motor 112 may be coupled to the crankshaft 19 via the gearbox 109. The electric motor 112 is coupled to the driveshaft 116 via the gearbox 109. Both the ICE 111 and the electric motor 112 may therefore contribute to rotation of the driveshaft to drive the wheels of the vehicle. The drivetrain may also comprise a differential 110 to split the drive originating from the power source to drive more than one wheel 106. The electric motor 112 may be connected to the crankshaft 19 via an electric motor gearbox 112. Therefore, the torque delivered to the crankshaft and/or clutch(es) by the electric motor may be different to the torque generated by the electric motor itself.

The ICE is coupled to a fuel tank 113. The ICE is coupled to an exhaust system indicated generally at 114 that comprises a catalytic converter (not shown). The exhaust system is arranged to convey exhaust gases and residual combustion mixture from the internal combustion engine to a point exterior of the vehicle. The electric motor 112 is coupled to a battery 115. The power source and drive train 108 form part of a powertrain 117.

Also within the vehicle body 101 is a seat 102 for a driver. When a driver sits in the seat 102 he can reach an accelerator pedal 103 with his foot. The accelerator pedal is pivotable about its rearmost end relative to the body of the vehicle and can be used to indicate powertrain torque demand. In other words, the position of the accelerator pedal provides a command signal to the powertrain indicating a demanded torque. Its forward end is biased upwardly by spring (not shown) to an uppermost position where it hits a stop and can be pressed down by the driver's foot to a lowermost position where it hits another stop. The uppermost position of the pedal indicates that no torque is demanded from the powertrain. The lowermost position of the pedal indicates that a maximum torque is demanded from the powertrain. The pedal is thus constrained to be movable only between the uppermost position ("0%") and the lowermost position ("100%"). A position detector 104 is attached to the pedal and senses the angle of deflection of the pedal. It will be appreciated that other accelerator controls could be used instead of the accelerator pedal 103 to gather the target drive demand from the powertrain of the vehicle requested by the driver. For instance, the vehicle could comprise a hand operated control as an accelerator control. The vehicle may also calculate the target drive demand autonomously, for example, by means of an adaptive cruise control system.

The operation of the ICE 111 is regulated by an engine control unit (ECU) 118. The ECU 118 comprises a processor 121 and a non-volatile memory 120. The ECU 118 may comprise more than one processor 121 and more than one memory 120. The memory 120 stores a set of program instructions that are executable by the processor, and reference data such as look-up tables that can be referenced by the processor in response to those instructions. The processor 121 may be configured to operate in accordance with a computer program stored in non-transitory form on a machine readable storage medium. The computer program may store instructions for causing the processor to perform the operations of the ECU in the manner described herein. The ECU may be a discrete unit or part of a more general vehicle control unit.

The ECU 118 is coupled to the position detector 104 to receive from it the detected position of the accelerator pedal. The ECU is coupled to the ICE 111 to receive from it data relating to the operation of the engine, such as current RPM, engine temperature and inlet air temperature, and to transmit to the engine control information that will regulate the operation of the engine. That control information could, for example, include the amount of fuel and/or air to be charged in each inlet stroke, valve and ignition timings and turbo boost level.

The ECU may control valve timings within the ICE 111. The ECU may be configured to determine the fuel/air ratio (i.e. the richness) of the combustion mixture. For example, the ECU may be configured to receive readings from an air-fuel meter such as a lambda sensor. The ECU may be configured to control the injection of fuel into the engine. For example, the ECU may vary the flow-rate of fuel injected in dependence on a reading from the lambda sensor. In certain conditions, the ECU may be configured to cut the injection of fuel into the engine and adjust the spark timing of the engine, as will be described in more detail below.

The program instructions stored by the memory define a mechanism whereby the ECU can determine a set of operating conditions for controlling the powertrain in response to a set of input parameters it has received and/or computed. When the vehicle is being driven normally, the ECU may follow a two-stage process to determine the output parameters. First, in response to at least some of the input parameters (including, for example, accelerator position and a representation of accelerator direction) the ECU determines a target drive demand from the powertrain. This target drive demand may be the drive required from the engine to drive the vehicle directly, or the drive required to power one or more electrical machines to generate power that is then used to drive the vehicle. The drive demand can conveniently be a torque demand, but it could be expressed in other ways such as power demand or fuel burned per unit time. Second, using a pre-stored model of the behaviour of the powertrain, the ECU determines the operating conditions needed to cause the powertrain to satisfy that drive demand. It then transmits those operating conditions to the powertrain to cause it to behave in accordance with the computed drive demand. These stages are repeated frequently: typically 20 or more times per second, to generate a series of output values reflecting up-to-date input values.

The vehicle 100 further includes a launch control 105. The launch control 105 is coupled to the ECU 118. The launch control 105 may be actuatable by the driver seated in the driver seat 102. The launch control 105 has an active mode and an inactive mode. Once the launch control has been actuated by the driver, it is in the active mode. When the launch control is released, it will return to the inactive mode. The launch control 105 may be located proximal to the driver seat 102. The launch control 105 may be located on the driver seat 102. The launch control 105 may be located on a steering wheel, stalk or paddle of the vehicle.

The launch control 105 may take the form of a depressible button. The launch control 105 may take the form of a switch for example a toggle switch or a rocker switch. The launch control 105 may not be a physical control but could be a virtual control. For example, the launch control may be displayed on an electronic display.

As will be described in more detail below, the launch control 105 may be used by the driver to interact with the vehicle so as to select a moment at which maximum acceleration of the vehicle can be instantaneously achieved. The launch control collaborates with other previously described components of the vehicle to achieve a functionality which allows maximum vehicle acceleration to be delivered at a time selected by the driver after a rolling vehicle start. A rolling vehicle start means that the vehicle is travelling at a non-zero speed. In other words, the launch control can be used by the driver to initiate on demand maximum acceleration some time after the vehicle has started moving. In other words, the launch control can be used by the driver to initiate on demand maximum acceleration whilst the vehicle is moving.

According to one example, once the driver has started the vehicle and achieved a non-zero speed using the accelerator pedal 104 as described above, the driver may actuate the launch control 105. In other words, the driver actuates the launch control once the vehicle has started moving. According to this example, the launch control is a depressible button. Actuating the launch control therefore involves depressing the button. Once the launch control button has been depressed, the launch control is in its active mode.

When the launch control is in its active mode, the ECU 118 controls the powertrain 117 such that the current speed of the vehicle is maintained. In other words, in response to the launch control 105 entering the active mode, the ECU controls the powertrain such that the current speed of the vehicle is fixed. When the launch control active mode is activated, the driver may fully depress the accelerator pedal to its lowermost position and despite the fact the accelerator pedal is fully depressed, the speed of the vehicle will not change. In other words, the speed of the vehicle cannot be increased while the launch control is in the active mode.

While the accelerator pedal stays in the lowermost position, the vehicle will be driven at the same speed until the launch control is released. In other words, the vehicle will travel at the same speed until the launch control leaves the active mode.. While the accelerator pedal is fully depressed, the vehicle will continue travelling at a constant speed until the launch control exits the active mode.

While in the active mode, any changes to the position of the accelerator pedal in a direction away from its lowermost position may result in a reduction to the speed of the vehicle. However during the active mode, the accelerator pedal may not be used to increase the speed of the vehicle.

According to the present example, the driver holds down the launch control button to depress it and keep the launch control in the active mode. As will be described in more detail below, when the launch control is in the active mode, and the accelerator pedal is in a fully depressed (lowermost) position, the ECU 118 will control the powertrain to operate so as to precondition the components of the powertrain for maximum acceleration while ensuring that the vehicle continues to travel at the same speed. When the driver chooses to release the launch control e.g. by no longer depressing the button, the launch control will enter the inactive mode. The vehicle will no longer travel at the same speed. When the launch control enters the inactive mode, because the accelerator pedal is fully depressed, and due to the pre-conditioning of the powertrain, the vehicle will rapidly accelerate. The vehicle is able to instantaneously accelerate when the launch control is released because the components of the powertrain have been preconditioned while the launch control was in the active mode.

According to a different example, the driver may initially actuate the launch control e.g. by depressing a button to activate the active mode, and later actuate the launch control again to switch the control into the inactive mode. This control technique may be used commonly in examples where the launch control takes the form of a switch. This example may be used in combination with the example discussed above, in that a short press of the button can activate or deactivate the active mode but a long press of the button (i.e. the driver holding it down) can activate the active mode until the long press comes to an end.

According to a further example, the accelerator pedal may be used to switch the launch control to the inactive mode. The accelerator pedal may be in a fully depressed (lowermost) position when the launch control is in the active mode. According to this example, releasing the accelerator pedal may switch the control into the inactive mode. In other words, a change to the position of the accelerator pedal in a direction away from its lowermost position may act as a signal for the launch control to leave the active mode.

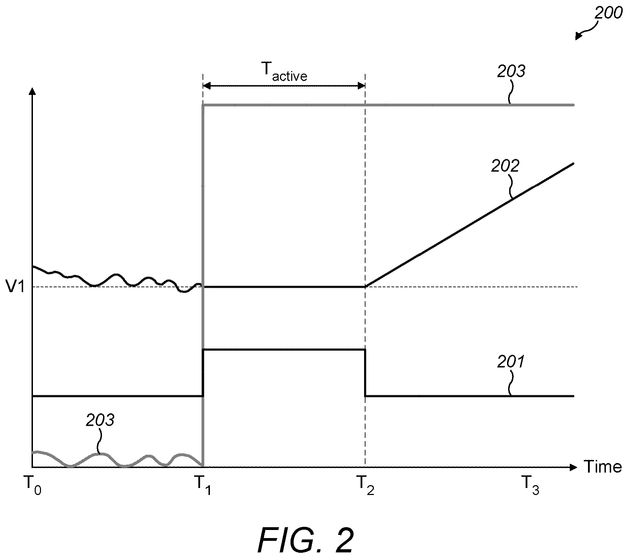

Figure 2 shows a graph 200 of vehicle speed against time. The graph 200 shows a line 201 representing the mode of the launch control 105. Figure 2 shows that the launch control is actuated at time T₁ and released at time T₂. Therefore the launch control is in the active mode between time T₁ and time T₂. This period of time will be referred to herein as the active period or T_{active}. At time T₂, the launch control resumes its inactive mode.

The graph further shows a line 202 representing the speed of the vehicle. A positive value for the speed represents movement of the vehicle in a forward direction. The graph shows that the vehicle is moving from time T₀ to T₃. Between time T₀ and time T₃, the vehicle has a non-zero speed. The vehicle speed varies between T₀ and T₁. The vehicle speed at time T₁ is equal to V₁. Between time T₁ and T₂, the vehicle speed stays fixed at V₁. The vehicle speed is equal to V₁ for the duration of the time period T_{active}, or until T₂. Figure 2 shows that after time T2, the speed of the vehicle rapidly increases. In other words, as soon as the launch control returns to the inactive mode at T₂, the vehicle accelerates.

Finally, the graph shows a line 203 representing the position of the accelerator pedal 103. The data illustrated in line 203 may be collected by the pedal position detector 104 previously described. As previously described, the vehicle speed varies between time T₀ and T₁ This is reflected in the position of the accelerator pedal which varies between time T₀ and T₁. At time T₁, the driver fully presses down on the accelerator pedal. In other words, at time T₁ the pedal is at its lowermost position ("100%"). Despite the accelerator pedal being at its lowermost position, figure 2 illustrates that during T_{active}, the vehicle's speed is unaffected. In other words, despite the driver pressing down fully on the accelerator pedal, when the launch control is in the active mode, the ECU 118 controls the ICE 111 such that the vehicle travels at the constant speed V₁. The driver maintains pressure on the accelerator pedal during T_{active} such that the accelerator is fully pressed down at time T₂. As the launch control is released at time T₂ and is no longer in the active mode, at time T₂, the accelerator pedal being fully depressed results in acceleration of the vehicle.

It has been found during normal vehicle operation that it takes some time for the ICE to achieve optimal operating conditions in order to achieve maximum acceleration. In other words, there is a delay between maximum acceleration being requested by the driver (e.g. by pressing down the accelerator pedal) and the requested acceleration being implemented by the engine. According to the vehicle being operated using the launch control functionality illustrated in figure 2, maximum acceleration (and performance) of the vehicle may be achieved almost instantaneously as the launch control is released at time T₂. While the launch control is in the active mode, the powertrain is prepared for maximum acceleration while maintaining the vehicle at a constant speed. As will be explained in more detail below, preconditioning of the powertrain occurs while the launch control is in the active mode so that the engine is prepared to achieve optimal operating conditions and rapid acceleration at time T₂.

The present invention therefore allows the driver of the vehicle to select a period of time after the vehicle has started moving during which the vehicle will travel at a constant speed. During this period, the vehicle powertrain is pre-conditioned such that at the end of the period of time, which is determined by the driver, the components of the powertrain can operate at maximum efficiency to deliver maximum vehicle acceleration.

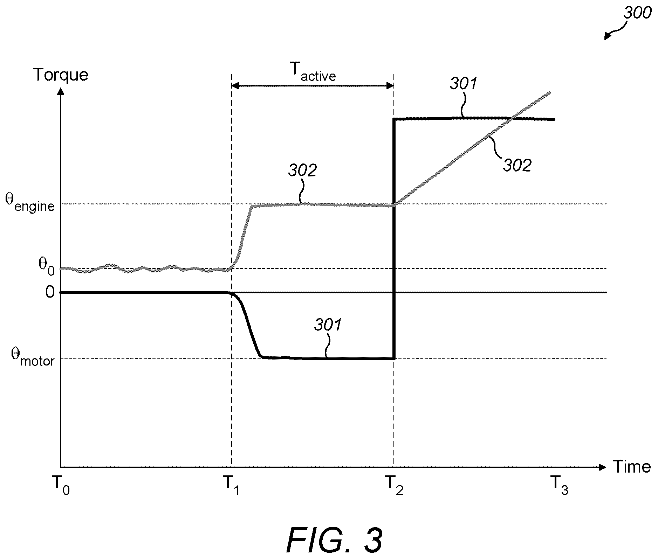

Figure 3 shows a graph 300 of powertrain torque against time. As described with respect to figure 1 above, the vehicle 100 includes a powertrain 117 which features two power sources: a spark-ignited internal combustion engine (ICE) 111 and an electric motor 112. The graph 300 shows a line 302 representing the torque output by ICE 111 (Θ_{engine}). Line 301 represents the torque output by electric motor 112 (Θₘₒₜₒᵣ).

As discussed herein, the electric motor 112 may be connected directly to the crankshaft 119 of the ICE 111, alternatively the electric motor may be connected via an electric motor gearbox and/or via the gearbox 109. Therefore, the torque output by the electric motor 112 (Θₘₒₜₒᵣ) may be the actual torque output by the electric motor (Θₘₒₜₒᵣ) or alternatively the torque produced by the electric motor 112 at the point in the drivetrain where the drives from the electric motor 112 and the ICE 111 are combined. In other words, Θₘₒₜₒᵣ may refer to the electric motor torque as calculated at the output from the gearbox 109 (i.e. at the clutch level). Similarly, the torque output by the ICE 111 (Θ_{engine}) may be the torque produced by the ICE 111 at the point in the drivetrain where the drives from the electric motor 112 and ICE 11 are combined. In other words, Θ_{engine} may refer to the ICE torque as calculated at the output from the gearbox 109 (i.e. at the clutch level).

Graph 300 shows times T₀, T₁, T₂ and T₃, which are the same times illustrated in graph 200 seen in figure 2. Thus the launch control is actuated at time T₁ and released at time T₂. Therefore the launch control is in the active mode during T_{active}. At time T₂, the launch control resumes its inactive mode.

Graph 300 shows that between time T₀ and T₁, the ICE 111 outputs a small variable positive torque. Between time T₀ and T₁, the electric motor 112 outputs zero torque. The net torque output by the powertrain is the sum of the torque output by the engine and the torque output by the motor and is equal to Θ₀. The engine torque between T₀ and T₁ is therefore equal to Θ₀. Between time T₀ and T₁ , the net torque output by the powertrain is Θ₀, which has a small variable positive value. This is reflected in graph 200 which shows that the speed of the vehicle between T₀ and T₁ is approximately constant but varies slightly The vehicle experiences only small amounts of acceleration between T₀ and T₁. Due to frictional forces acting on the vehicle (air resistance, dynamic friction from the road surface etc.), a small positive torque (Θ₀) is required to be output from the powertrain in order to keep the vehicle moving at a constant speed.

At time T₁, when the launch control enters the active mode, the ECU 118 commands the electric motor to output a large negative torque value, Θₘₒₜₒᵣ. The electric motor continues to output Θₘₒₜₒᵣ for the duration of T_{active}. In order that the vehicle travels at the same constant speed during T_{active} the net torque output by the powertrain must not change between time T₀ and T₂ and therefore must remain being equal to Θ₀. In other words, the powertrain must continue to output a small positive value of net torque Θ₀. The load on the ICE 111 is therefore increased proportionally to the negative torque output by the electric motor 112. In order to maintain a constant value for Θ₀, the torque output by the ICE Θ_{engine} during the active period increases by the same amount as the decrease in torque output by the motor Θₘₒₜₒᵣ. The ICE thus outputs a positive torque approximately equal and opposite to the large negative torque being output by the electric motor plus the original torque Θ₀. In other words, the ICE outputs an augmented torque Θ_{engine}. During T_{active}, the torque output by the electric motor 112 is reduced by a first torque amount. The first torque amount is equal to Θₘₒₜₒᵣ. The torque output by the ICE is augmented so as to increase the torque output by the ICE by a second torque amount, the second torque amount being equal to the first torque amount. The second torque amount is equal to Θ_{engine-} Θ₀. Θₘₒₜₒᵣ is therefore equal to the difference between Θ_{engine and} Θ₀. During T_{active}, the sum of Θ_{engine} and Θₘₒₜₒᵣ is therefore equal to Θ₀. The negative torque Θₘₒₜₒᵣ output by the motor therefore acts as a torque sink for the positive torque being output by the ICE Θ_{engine} such that the increased engine torque does not result in any acceleration during T_{active}. The means by which the output of ICE can be increased during T_{active} is explained in more detail below.

During T_{active} the electric motor 112 outputs a large negative torque value. In other words, during this period, the motor acts as a generator. During T_{active}, the motor 112 generates an amount of energy which may be harnessed by the drivetrain for future use. For example, energy generated by the motor 112 while the launch control is in the active mode may be stored in a battery such as battery 115. It follows that in order for the energy generated by the motor be stored during T_{active}, the battery is required to have some capacity for storing charge. In other words, in order for the electric motor to output the large negative torque T_{active}, the battery is required to not be fully charged at time T₁. For scenarios in which the battery is already fully charged, it may therefore be necessary to at least partially discharge the battery before the launch control enters the active mode i.e. before time T₁. Similarly, there may be a limit on the amount of time the launch control can remain in the active mode. For example, while the launch control is in the active mode, the battery may become fully charged due to the energy generated by the electric motor 112. Once the battery is fully charged, since there is no longer an outlet for the energy being generated by the electric motor, the motor may no longer be able to output a negative torque. The launch control may therefore be required to leave the active mode once the battery becomes fully charged. There may therefore be a maximum length of time the launch control can spend in the active mode (i.e. a maximum value for T_{active}) dictated by the amount of charge that can be stored in the battery.

As will be explained in more detail below, commanding the electric motor to output a large negative torque offsetting the positive engine torque means that the powertrain can be pre-conditioned during T_{active} to have the capability of outputting a large torque, without causing any acceleration of the vehicle during that time. The result of this pre-conditioning is that the vehicle can almost instantly deliver maximum acceleration when the launch control is released at T₂.

As seen in graph 300, at time T₂, when the launch control is released and the launch control re-enters the inactive mode, the ECU 118 controls the torque output by the electric motor to increase so as to output a large positive value. Due to the pre-conditioning of the powertrain and the fact that the accelerator pedal is at a fully depressed position after T₁, at time T₂ the ICE also outputs a large positive torque. Therefore after T₂, the total torque output by the ICE and the electric motor has a value far greater than Θ₀. The large positive torque output by the components of the powertrain results in a rapid acceleration of the vehicle at time T₂ (as shown in figure 2).

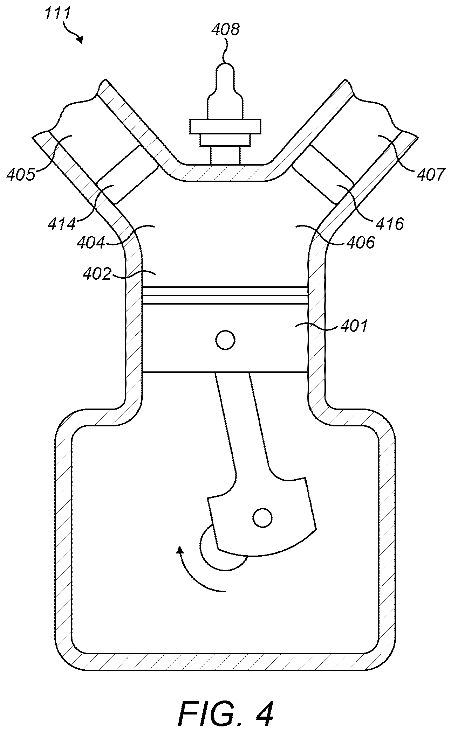

The spark-ignited internal combustion engine (ICE) 111 is shown in more detail in figure 4. The spark-ignited internal combustion engine 111 comprises a plurality of cylinders, each comprising a piston 401 configured to undergo reciprocal motion within a combustion chamber 402 having a volume V_{CC}. For simplicity, figure 4 shows only one cylinder. It will be appreciated that the following description applies to multiple cylinders of the ICE. Each piston 401 is coupled at one its ends to the crankshaft 119 via a connecting rod.

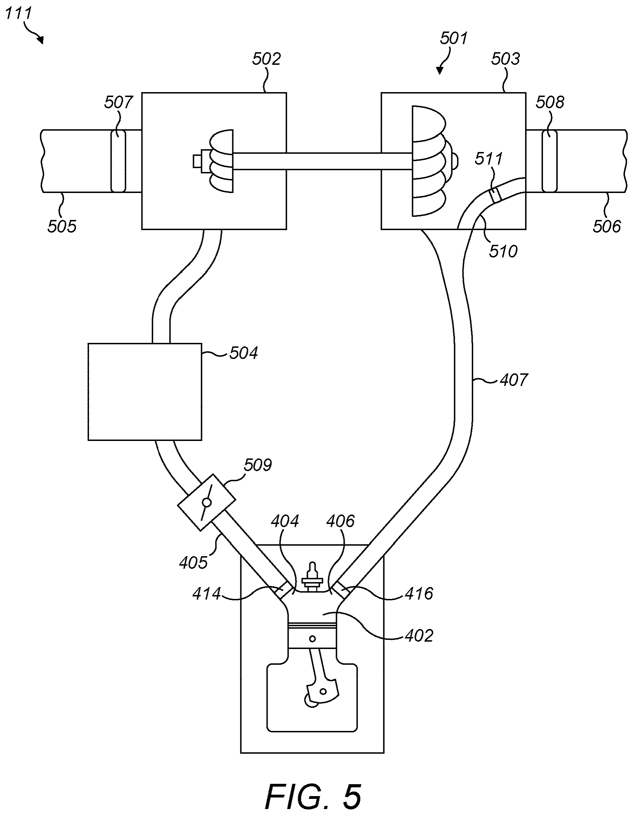

Each cylinder is connected to an intake port 404 for receiving a combustion mixture to be ignited. In the event the engine is a direct-fuel injection engine, the intake port may receive only air, with the fuel being injected directly into the combustion chamber by a fuel injector. The intake port may be connected to an intake manifold 405 (seen in figure 5). The intake manifold is configured to distribute air to each cylinder of the engine via the respective intake ports. The intake manifold may be configured to distribute air to each cylinder of the engine in the case of the engine using a type of fuel injection which injects the fuel close to the intake ports of the cylinder. The vehicle may be configured to inject fuel into the intake manifold (known as single point injection or central point injection). A chamber intake valve 414 is housed in each intake port 404 to control the flow of combustion mixture into the combustion chamber. Each intake port may house more than one intake valve. The vehicle may alternatively inject fuel into each intake port upstream of the intake valve (known as multi-port injection).

Each cylinder is further connected to an exhaust port 406 to allow the expulsion of exhaust gases and residual combustion mixture from the combustion chamber 402. In alternative examples each cylinder may be connected to more than one exhaust port. Each exhaust port is connected to an exhaust manifold 407 (seen in figure 5). A chamber exhaust valve 416 is housed within each exhaust port 406 to control the flow of combustion mixture out from the combustion chamber through the exhaust system. Each exhaust port may house more than exhaust valve.

When the internal combustion engine is running, the engine may typically perform a four-stroke combustion cycle. The combustion cycle converts the reciprocal motion of each cylinder piston into a rotary motion of the crankshaft 119, indicated by the arrow in figure 4. The four-stroke combustion cycle is made up of the following strokes: the intake stroke, the compression stroke, the combustion stroke and the exhaust stroke. A description of each stage of the four-stroke combustion cycle will now be made with reference to a single cylinder. The other cylinders operate in a corresponding fashion, generally with an offset in the sequence of the strokes between each of the cylinders. Such an offset may mean that whilst one cylinder is undergoing a combustion stroke another is undergoing an exhaust stroke.

During the intake stroke the chamber intake valve 414 within the intake port 404 is opened to permit the piston to draw air or the air-fuel mixture (combustion mixture) into the combustion chamber 402 of the cylinder. When the intake valve is opened the piston may be positioned at or near its highest position within the combustion chamber. The highest position of the piston may be referred to as the top-dead-centre. The piston may then move down within the combustion chamber during the intake stroke to increase the volume of the air-fuel mixture within the chamber. At the end of the intake stroke the intake valve 414 within the intake port 404 is closed to prevent further fuel from being drawn into the cylinder. The intake valve may be closed when the piston 401 is at or near the bottom of the chamber. The valve timings of the intake valve may be altered to affect the performance of the ICE. For example the timing of the intake valve opening can be made earlier or later with respect to the position of the piston within the cylinder. Similarly, the timing of the intake valve closing can be made earlier or later with respect to the position of the piston within the cylinder.

In the compression stroke the piston 401 moves up towards the top of the chamber to compress the combustion mixture within the combustion chamber. During the combustion stroke the (compressed) combustion mixture is ignited. The ignition of the combustion mixture drives the piston downwards within the combustion chamber. In typical gasoline engines the combustion mixture is ignited by a spark. The use of such a spark to ignite the combustion mixture within the cylinder chambers of the engine is referred to as sparking of the ICE. An ICE that ignites a combustion mixture in this manner may be referred to as a spark-ignited internal combustion engine. Each cylinder of the engine may comprise a spark plug 408 or a glow-plug for producing the spark to ignite the combustion mixture. A spark plug may comprise a central electrode and a lateral electrode spaced from the central electrode. To fire the sparklug a potential difference is applied between the electrodes. When the potential difference exceeds a threshold, the gas between the electrodes becomes ionized and a current flows or arcs between the electrodes. This current flow generates the spark that arcs between the electrodes. The time at which the spark plug generates the spark is referred to as the spark timing.

In order to generate a powerful combustion stroke, it is beneficial to initiate the spark at a time slightly before the piston reaches top-dead-centre. This is because it takes some time to burn the combustion mixture. Igniting the mixture before the piston reaches top-dead-centre means that the mixture is fully burnt shortly after the piston reaches top-dead-centre. Burning the mixture at this time means that maximum pressure in the combustion cylinder will occur sometime after the piston reaches top-dead-centre allowing the ignited mixture to push the piston down the cylinder with the greatest force thereby generating fast rotation of the crankshaft 119,

Spark timing may be expressed in terms of an angle relative to the top-dead-centre position of the piston. A spark angle is the angle of the piston relative to the top-dead-centre position of the piston when the combustion mixture is ignited. For example, an optimal spark angle resulting in the most powerful combustion stroke may be 12 degrees BTDC (before top-dead-centre). This means that the spark is initiated when the piston is at a position 12 degrees before top-dead-centre. The spark timing for each cylinder may be variably controlled to alter the performance of the ICE. The spark timing may for example be advanced or retarded with respect to the top-dead centre position of the piston. The spark timing may for example be advanced or retarded with respect to the optimal spark angle. The spark timing is said to be advanced if the spark is generated before the piston reaches the optimal spark angle, e.g. 14 degrees BTDC. The spark timing is said to be retarded if the spark is generated after the piston reaches the optimal spark angle, e.g. 10 degrees BTDC. The spark timing may be retarded such that the piston is at a position after top-dead-centre when the combustion mixture is ignited by the spark, e.g. 10 degrees ATDC (after top-dead-centre).

The engine may be sparked according to a firing order of the engine. For example, for an engine comprising a plurality of cylinders, each cylinder may be sparked at a sequential point in time. Alternatively, pairs of cylinders are sparked at sequential points in time (i.e. cylinders within a given pair have the same spark timing). The firing order is the order in which the engine's cylinders are sparked. The sparking of each of the engine's cylinders according to the firing order may be referred to as a firing cycle.

The final stroke in the combustion cycle is the exhaust cycle. During the exhaust cycle the chamber exhaust valve 416 in the exhaust port 406 opens to allow the expulsion of exhaust gases and/or unburnt fuel from the chamber. Exhaust gases and/or unburnt fuel expelled from the chamber are passed through the exhaust manifold (seen in figure 5). The chamber exhaust valve 416 may be opened when the piston reaches its lowest position within the chamber (referred to as bottom-dead-centre) following the combustion stroke. The exhaust valve opening and closing timing may be variably controlled. For example, the opening timing may be advanced or retarded with respect to the bottom-dead-centre position of the piston.

It will be understood that the more combustion mixture is input to the combustion chamber, the more power will be generated during the combustion stroke. In other words, combustion of a large volume of combustion mixture will drive the piston downwards more powerfully than combustion of a smaller volume of combustion mixture. Increasing the volume of combustion mixture input to the chamber 402 therefore increases the power generated by the engine and increases the torque imparted on the crankshaft. It is therefore desirable to maximise the amount of air input to the chamber in order to maximise the torque output by the engine.

The ICE 111 includes a turbocharger 501, which is shown in figure 5. The turbocharger comprises a compressor 502 and a turbine 503 which are coupled together. The turbocharger 501 is connected to the ICE combustion chamber 402 via the intake manifold 405 and the exhaust manifold 407. The turbocharger is configured to increase the amount of air being input to the combustion chamber 402. Figure 5 shows that the intake manifold may also include an air cooler 504. Each intake port 404 further includes a throttle 509 configured to regulate the flow of the combustion mixture into the intake manifold 405. In general there may be one or more intake ports and throttles. The throttles 509 are controlled by the ECU 118 for regulating the flow of the combustion mixture into the intake manifold 405. For example, when the throttle 509 has an open position, more air is allowed to enter the intake manifold than when the throttle has a closed position. Thus, when the throttle 509 has an open position, a larger volume of combustion mixture is allowed to enter the chamber 402 than when the throttle has a more closed position.

Ambient air is input to the turbocharger 501 (and therefore to the engine 111) at compressor inlet 505. The compressor inlet includes a compressor inlet valve 507 for controlling the amount of ambient air input to the turbocharger compressor. The input air is compressed by the compressor 502 and directed to the chamber 402 via intake manifold 405. The compressed air may be cooled by air cooler 504 en route to the combustion chamber 402. As explained above, fuel is injected into the ICE combustion chamber 402 as well as the compressed and cooled air forming a combustion mixture. As will be explained in more detail below, the combustion mixture is at least partially burnt within the combustion chamber and is output at the exhaust port 406. The exhaust gases and/or unburnt fuel are output from the chamber and directed back to the turbocharger 501 via exhaust manifold 407. At least some of the exhaust gases and/or unburnt fuel enter the turbine 503 thereby causing the turbine to rotate. Because the turbine 503 is coupled to the compressor 502, rotation of the turbine turns a wheel of the compressor. Gases which have been used to drive the turbine are then output from the turbocharger at the turbine exhaust 506. The turbine exhaust includes a turbocharger exhaust valve 508 for controlling the amount of exhaust gases and/or unburnt fuel that are output from the turbine.

The turbocharger further includes a wastegate tube 510. The wastegate tube connects the exhaust manifold 407 to the turbine exhaust 506. Gases passing through the wastegate tube do not pass through the turbine 503. The wastegate tube therefore acts as a bypass to the turbocharger turbine allowing gases to flow directly from the exhaust manifold 407 to the turbine exhaust 506 without entering the turbine. A wastegate valve 511 is positioned within the wastegate tube 510. The wastegate valve 511 is therefore configured to control the flow of gases from the exhaust manifold 407 to the turbine exhaust 506. The wastegate valve 511 can therefore be used to control how much gas enters the turbine. For example, when the wastegate valve 511 has an open position, a large proportion of exhaust gases are directed straight to the turbine exhaust 506 without interacting with turbine 503. In contrast, then the wastegate valve 511 has a more closed position, fewer exhaust gases can be directed straight to the turbine exhaust meaning that more exhaust gases enter the turbine 503.

The turbine exhaust 506 may be connected to exhaust system 114 seen in figure 1. The exhaust system 114 may include a catalytic converter (not shown). Exhaust gases are channelled from the turbine exhaust 506 into the catalytic converter. The vehicle may comprise more than one catalytic converter. The exhaust system 114 may also include a tail pipe. The or each catalytic converter may be further connected to a tail pipe. The tail pipe is configured to convey exhaust gases that have passed through the catalytic converter to a point exterior of the vehicle. The vehicle may comprise one or more tail pipes depending on the number of catalytic converters and the cylinder arrangement of the engine.

During normal vehicle operation (i.e. before the launch control has been activated at time T₁) the powertrain operates under a first set of operating conditions. The operating conditions include operating conditions of the ICE 111 and the turbocharger 501. The first set of operating conditions may include positions of the previously described valves: the compressor inlet valve 507, the chamber intake valve 414, the chamber exhaust valve 416, the turbine exhaust valve 508. The first set of operating conditions may include positions of the wastegate valve 511 and the throttle 509. During normal vehicle operation, the wastegate valve 511 and the throttle 509 may be positioned so as to allow a first volume of gases to circulate through the ICE/turbocharger loop seen in figure 5.

When the launch control has been activated i.e. when the launch control is in the active mode, the powertrain operates under a second set of operating conditions. The second set of operating conditions are different to the first set of operating conditions. The second set of operating conditions are less efficient than the first set of operating conditions. Under the second set of operating conditions, the wastegate valve 511 and the throttle 509 are positioned so as to allow a second volume of gases to circulate through the ICE/turbocharger loop seen in figure 5. The second volume of gases is larger than the first volume of gases. Under the second set of operating conditions, the wastegate valve 511 has a more closed position than under the first set of operating conditions. In other words, when the launch control is in the active mode, the wastegate valve 511 has a more closed position than when the launch control is in the inactive mode.

Keeping the wastegate valve 511 in a more closed position means that less of the exhaust gases and/or unburnt fuel can be output from the turbocharger without interacting with the turbine. This means that the gases are kept within the turbocharger and continue to cause rotation of the turbine 503. In other words, setting the wastegate valve 511 to have a more closed position ensures that the rate of rotation of the turbine 503 is maximised. As previously explained, due to the coupling between the turbine and the compressor 502, maintaining maximum turbine rotation also results in maintaining maximum rotation of a wheel of the compressor. The rate at which the compressor can compress incoming ambient air is therefore also increased.

Under the second set of operating conditions, the throttle 509 has a more open position than under the first set of operating conditions. In other words, when the launch control is in the active mode, the throttle 509 has a more open position than when the launch control is in the inactive mode. Due to the more open position of the throttle 509, during the launch mode, a higher volume of compressed air is allowed into the intake manifold 405 and therefore into the chamber 402. The throttle 509 may have a continuously varying position and the position of the throttle may be considered to be the average position of the throttle over a period of time.

As described above, due to the more closed position of the wastegate valve 511, the compressor 502 operates at a higher rate and so the flow of compressed air being directed from the turbocharger 501 to the chamber 402 is also maximised. Due to the more open position of the throttle 509, an increased volume of compressed air is allowed to enter the intake manifold 405. The pressure of compressed air in the intake manifold 405 being directed towards the chamber 402 may be known as the boost pressure. The boost pressure is increased by setting the wastegate valve 511 to a more closed position and setting the throttle 509 to a more open position.

As previously described, in typical gasoline engines the combustion mixture is ignited by a spark. Each cylinder of the spark ignited ICE 111 may comprise a spark plug 408 or a glow-plug for producing the spark to ignite the combustion mixture. The time at which the spark plug generates the spark is referred to as the spark timing. As explained previously, igniting the spark at an optical spark angle (e.g. 12 degrees BTDC) results in the most powerful combustion stroke due to the timing of the burning and expansion of the combustion mixture resulting in maximum pressure being imparted on the piston. The spark timing for each cylinder may be variably controlled to alter the performance of the ICE. The spark timing may for example be advanced or retarded with respect to the optimal spark angle.

The second set of operating conditions may include retarding the spark timing. Retarding the spark timing may involve delaying the spark. Delaying the spark delays ignition of the combustion mixture. This means that not all of the combustion mixture present in the combustion chamber is fully burned when the piston's combustion stroke begins. Therefore not all the combustion mixture is used to generate in-cylinder pressure to drive the piston. When the ICE is operating according to the retarded spark timing, a more energetic gas mixture reaches the exhaust port 406 than when the ICE is operating according to the optimal spark angle. Under the second set of operating conditions, the spark timing used is less efficient that the spark timing used under the first set of operating conditions. The result is that the combustion stroke of the piston is less powerful. Furthermore, since more energy reaches the exhaust port 406, a more energetic gas mixture is output to the exhaust manifold 407 and input to the turbocharger 501. Specifically, the higher enthalpy gases are input to the turbine 503 which further increases the rate at which the turbine rotates and thereby increases the boost pressure, as previously described.

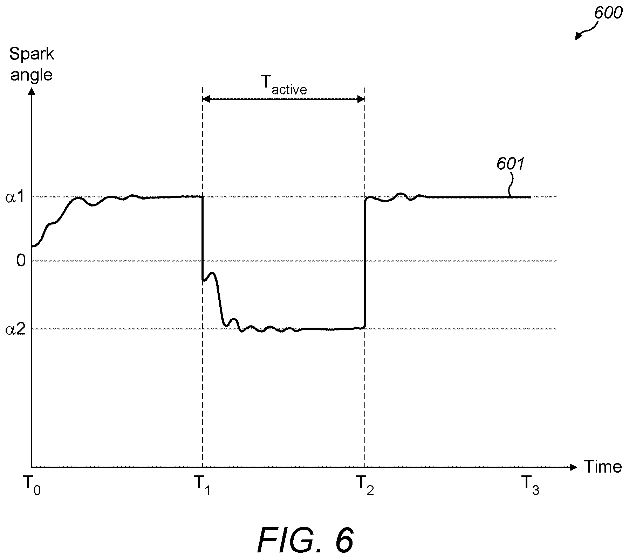

Figure 6 illustrates a graph 600. Graph 600 shows times T₀, T₁, T₂ and T₃, which are the same times illustrated in graph 200 seen in figure 2. Thus the launch control is actuated at time T₁ and released at time T₂. Therefore the launch control is in the active mode during T_{active}. At time T₂, the launch control resumes its inactive mode.

Graph 600 shows a line 601 representing the spark angle of a cylinder in the ICE 111. Figure 6 illustrates that during normal operation of the vehicle, between T₀ and T₁, the spark angle varies but is equal to α₁ for most of the period between T₀ and T₁. A₁ may be the optimal spark angle for the ICE 111. Figure 6 shows that α₁ has a positive value, that is a value greater than zero. In graph 600, a positive value for spark angle represents an angle before top-dead-centre (BTDC). For example, α₁ may have a value of 12 degrees TDC.

At time T₁, when the launch control is actuated, the spark angle is immediately reduced to α₂. A₂ is less than α₁. Figure 6 shows that α₂ has a negative value, that is a value less than zero. In graph 600, a negative value for spark angle represents an angle after top-dead-centre (ATDC). In other words, at T₁, the cylinder operates with a retarded spark angle. The spark angle is retarded significantly such that the spark is ignited after the piston has reached top-dead-centre. The spark angle is retarded until T₂ when the launch control is released. The spark angle is retarded for the duration of T_{active}. In other words, the sparking timing is delayed during T_{active}.

Graph 600 shows that at time T₂, when the launch control is released, the spark angle returns to its original value of α₁. Immediately after T_{active}, the ICE operates with the optimal spark angle in order to maximise the power of the piston's combustion stroke. The optimal spark angle used by the ICE after T₂ therefore contributes to the vehicle achieving maximum acceleration as soon as the launch control is released.

Retarding the spark timing as described has the effect of reducing the power generated by the ICE thereby allowing the vehicle to maintain a constant speed during T_{active}. Further, retarding the spark timing contributes to the increase in boost pressure before the throttle 509 at the intake port 404 of the combustion chamber during T_{active}. As will be described in more detail below, building up the boost pressure while the launch control is in the active mode means that the vehicle can exhibit maximum acceleration more quickly when the launch control is released.

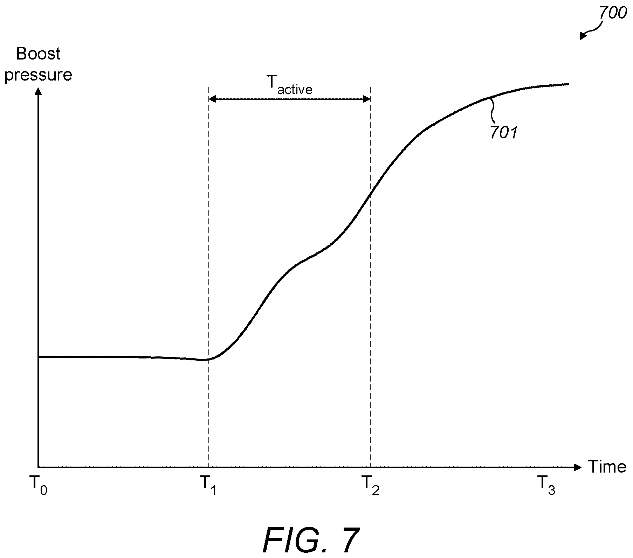

Figure 7 shows a graph 700 of pressure against time. Line 701 shows the boost pressure in the intake manifold 405 against time. At time T₁, when the launch control enters the active mode, the ECU commands the powertrain to operate under the second set of operating conditions. The graph 700 illustrates that this causes the boost pressure in the intake manifold to start to increase at time T₁. The boost pressure continues to increase between time T₁ and T₂.

As mentioned above, under the second set of operating conditions, the wastegate valve 511 has a more closed position than under the first set of operating conditions and the throttle 509 has a more open position than under the first set of operating conditions. Under the second set of operating conditions, the spark timing is retarded. Setting the position of the wastegate valve 511 to a more closed position and retarding the spark timing results in an increased rate of rotation of the turbine 503 of turbocharger 501. Setting the position of the throttle 509 to a more open position means that more of the air compressed by compressor 502 of turbocharger 501 can enter the intake manifold and be input to the chamber 402. In other words, the rate at which the compressed air enters the chamber 402 is increased. The overall throughflow of air around the ICE, turbocharger loop is therefore increased when the launch control is in active mode. Thus when the powertrain is operating under the second set of operating conditions during the active period, a larger quantity of more compressed air enters the ICE chamber 402 during each cycle of the piston 401. This means that when the launch control is in active mode, each stroke of the piston 401 is more powerful before the active mode is activated. During the active mode (during T_{active}), the ICE has the capacity to output a larger torque on the crankshaft.

As previously explained, at time T₂, the launch control is released. The launch control returns to the inactive mode and the ECU commands the powertrain to return to operating under the first set of operating conditions. As illustrated in figure 2, the accelerator pedal remains in a fully depressed lowermost position at T₂ meaning that the ECU commands the powertrain to output a large positive torque at T₂.

Despite the fact that the powertrain now operates under the first set of operating conditions (including reverting to the original spark timing and the throttle 509 and wastegate valve 511 returning to their original configurations), the boost pressure in the intake manifold 405 continues to increase for some time after T₂. As the torque output by the engine is increased (due to the command from the ECU in response to the accelerator pedal), the engine outputs an increased volume of exhaust gases. As previously described, an increased volume of exhaust gases increases the rate of rotation of the turbine 503 of the turbocharger increases the amount of compressed air generated by the turbocharger, thereby increasing the boost pressure in the intake manifold 405. The throughflow of air around the ICE, turbocharger loop therefore continues to increase as the acceleration of the vehicle increases. The boost pressure therefore increases with the net torque output by the powertrain. This can be seen by comparing line 301 of figure 3 with line 701 of figure 7. The boost pressure eventually levels out as the torque output by the powertrain approaches a maximum torque. In other words, as the net torque output by the powertrain reaches a plateau, so does the boost pressure in the intake manifold.

As previously described, when the launch control is in the active mode, the ECU 118 commands the electric motor to output a large negative torque value (during T_{active}). In order that the vehicle travels at a constant speed during T_{active}, the ECU commands the ICE to output an augmented positive torque Θ_{engine} which counteracts negative motor torque Θₘₒₜₒᵣ. Operating the powertrain under the second set of operating conditions means that the ICE can output a larger positive torque so as to balance out the negative electric motor torque meaning that the net torque Θ₀ does not change and the vehicle travels at a constant speed during T_{active}.

Under the second set of operating conditions previously described, the throughflow of air around the ICE, turbocharger loop is increased during T_{active}. Due to the increased air throughflow, the ICE has the capacity to output a maximum torque while the launch control is in the active mode and therefore cause the vehicle to exhibit maximum acceleration. However, it is desirable to keep the vehicle moving at a constant speed while the launch control is in the active mode so that the launch control 105 may be used by the driver to interact with the vehicle so as to select a moment at which maximum acceleration of the vehicle can be instantaneously achieved. While the launch control is in the active mode, the ICE and turbocharger are prepared to output a maximum torque (and therefore maximum acceleration) but the timing of when the maximum torque is output is selected by the driver (when the driver switches off the launch control active mode). The second set of operating conditions are therefore used to prepare the drivetrain such that the launch control can be used by the driver to initiate on demand maximum acceleration In order to limit the torque output by the ICE during T_{active} and ensure the vehicle travels at a constant speed, additional operating conditions are altered such that the net torque provided the powertrain remains constant.

The operating conditions of the powertrain include operating conditions of the ICE 111 and the turbocharger 501. Switching the drivetrain from operating under the first set of operating conditions to operating under the second set of operating conditions may involve altering operating conditions other than valve/throttle positions.

The second set of operating conditions may include retarding the spark timing. As previously discussed, the spark angle may be retarded while the launch control is in the active mode (during T_{active}). As described above, retarding the spark timing has the effect that the combustion stroke of the piston in the ICE combustion chamber is less powerful. Retarding the spark timing therefore has the effect of reducing the torque that is output by the ICE. Retardation of the spark timing can therefore be used as a means to ensure the torque output by the ICE is limited so that the vehicle travels at a constant speed during T_{active}.

The second set of operating conditions may include cutting the injection of fuel into the ICE. As previously described, each cylinder of the ICE 111 is connected to an intake port 404 for receiving a fuel-air combustion mixture to be ignited. Fuel may be injected into the cylinder directly or may be injected to the intake manifold 405 to be directed into the cylinder. The ECU 118 may be configured to cut the injection of fuel into the engine when the launch control is in the active mode. One approach to reducing the torque generated by an ICE is to perform an injection cut which is a type of fuel cut to the engine. An injection cut cuts the fuel supply to the combustion chambers of the engine. This may be done, for example, by maintaining the valves of the fuel injectors in a shut, or closed, position so that fuel is not injected into the intake manifold of the vehicle, or into the combustion chamber in the case of direct fuel injection. For example, chamber intake valve 414 or throttle 509 may be kept in a closed position. The chamber intake valve 414 or throttle 509 may be commanded to periodically open and close so as to implement the fuel cut. Thus, when the launch control is in the active mode and the drivetrain is operating under the second set of operating conditions, the amount of fuel entering the chamber 402 may be reduced. In other words, the second set of operating conditions may include a smaller amount of fuel being injected into the ICE chamber than the amount injected under the first set of operating conditions.

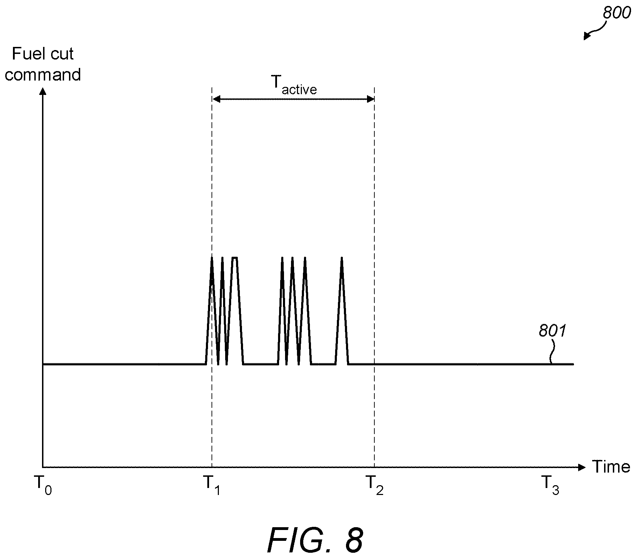

The graph 800 shown in Figure 8 illustrates the same time scale as shown in the graphs 200, 300, 600, 700 previously described. As previously discussed, the launch control is in the active mode between T₁ and T₂. The graph 800 seen in figure 8 shows a line 801 representing the fuel cut command. The graph illustrates that when the launch control is activated at time T₁, the fuel cut command is implemented. The various peaks shown in line 801 represent the timings of the command due to the four-stroke combustion cycle. The fuel cut command is therefore not a continuous command to reduce the amount of fuel being injected into the chamber but rather a series of discrete commands to reduce the amount of fuel being injected into the chamber in accordance with the combustion cycle as previously described. In this way, the average amount of fuel that is injected into the chamber over a period of time is reduced. However, on some injection cycles a full amount of fuel may be injected and on other injection cycles no fuel is injected. The reduction in the amount of fuel being injected into the chamber means that the ignition of the combustion mixture is less explosive and the combustion stroke of the piston is less powerful. The result is that the torque output by the ICE during the fuel cut is reduced. This technique may be used to limit the torque output from the ICE and the resulting acceleration while the launch control is in the active mode (during T_{active}).

Figure 8 shows that when the driver deactivates the launch control (i.e. at the end of T_{active}, at T₂), the fuel cut command is reversed. The amount of fuel entering the ICE chamber is no longer reduced. In other words, the amount of fuel being injected into the ICE chamber is increased at T₂.

In summary, when the launch control is released at time T₂:
- If the accelerator pedal is retained in the fully depressed, lowermost position, in response to the accelerator pedal being in its lowermost position, the ECU commands the engine and the motor to output a large positive torque (seen in figure 3).
- the ECU commands the powertrain to operate under the first set of operating conditions including one or more of:
   ∘ reverting to the optimal spark angle α₁ (seen in figure 6)
   ∘ reversing the fuel cut command so that the amount of fuel entering the ICE chamber is no longer reduced (seen in figure 8)
   ∘ reverting to the original positions of the wastegate valve 511 and throttle 509.

As described with respect to figure 7, due to the powertrain preconditioning involving adjusting the positions of the wastegate valve 511 and throttle 509, when the launch control active mode is deactivated, the increased airflow required for a large engine torque is already present in the ICE/ turbocharger loop. Thus, when the launch control exits the active mode at T₂, the spark angle returns to the optical spark angle, there is no longer a reduction in the amount of fuel being supplied to the combustion chamber 402 and there is increased flow of air through the powertrain. The result of reverting to these conditions of the first set of operating conditions is that the ICE is able to produce a large torque almost instantaneously when the launch control active mode is deactivated (i.e. when the launch control is released). The result of this large torque along with the already increased airflow through the powertrain is that the vehicle almost immediately exhibits maximum acceleration when the driver releases the launch control.

Thus, the presently described launch control active mode involving powertrain pre-conditioning allows the driver to interact with the vehicle so as to select a moment at which maximum acceleration of the vehicle can be instantaneously achieved.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. A vehicle comprising:
a plurality of wheels;
a powertrain for providing torque to a drive shaft coupled to at least one of the plurality of wheels, the powertrain comprising:
a spark-ignited internal combustion engine for igniting a volume of combustion mixture; and
an electric motor;
a launch control having an inactive mode during which the powertrain operates under a first set of operating conditions and an active mode during which the powertrain operates under a second set of operating conditions; and
a control system configured to respond to the launch control being in the active mode by commanding the powertrain to operate under the second set of operating conditions in which:
the electric motor outputs a negative torque; and
the internal combustion engine outputs an augmented torque which counteracts the negative torque output by the electric motor such that the vehicle travels at a constant speed.

2. The vehicle according to claim 1, wherein the vehicle comprises an accelerator pedal pivotable between an uppermost position and a lowermost position, the position of the accelerator pedal providing a command signal to the powertrain indicating a demanded torque, the uppermost position of the accelerator pedal providing a command signal indicating zero demanded torque and the lowermost position of the accelerator pedal providing a command signal indicating a maximum demanded torque.

3. The vehicle according to claim 2, wherein the period of time during which the launch control is in the active mode is the active period and the accelerator pedal is in the lowermost position during the active period.

4. The vehicle according to any preceding claim, wherein the launch control is actuatable to activate the active mode and de-activate the active mode.

5. The vehicle according to any preceding claim, wherein the launch control comprises any of a depressible button, a switch or a virtual control.

6. The vehicle according to any preceding claim, wherein the second set of operating conditions cause less efficient operation of the powertrain than the first set of operating conditions.

7. The vehicle according to any preceding claim, wherein operating conditions of the first set of operating conditions and the second set of operating conditions comprise the torque output by the electric motor and the torque output by the spark-ignited internal combustion engine.

8. The vehicle according to claim 7 as dependent on claim 3, wherein the torque provided by the powertrain during the active period is equal to the torque provided by the powertrain immediately before the active period, and the torque provided by the powertrain is a sum of the torque output by the spark-ignited internal combustion engine and the torque output by the electric motor

9. The vehicle according to claims 7 or 8, wherein the control system is configured to command the electric motor to reduce the torque output by the electric motor by a first torque amount in response to the launch control entering the active mode.

10. The vehicle according to any of claims 7 to 9, wherein the control system is configured to command the internal combustion engine to increase the torque output by the internal combustion engine by a second torque amount in response to the launch control entering the active mode.

11. The vehicle according to claim 10, wherein the first torque amount is equal to the second torque amount.

12. The vehicle according to any of claims 7 to 11, wherein the control system is configured to command the powertrain to increase the torque output by the electric motor and the torque output by the internal combustion engine in response to the launch control leaving the active mode.

13. The vehicle according to any of claims 7 to 12 as dependent on claim 2, wherein, for a given position of the accelerator pedal, the torque provided by the powertrain operating under the second set of operating conditions is smaller than the torque provided by the powertrain operating under the first set of operating conditions.

14. The vehicle according to any preceding claim, wherein:
the spark-ignited internal combustion engine comprises at least one combustion chamber configured to receive an injection of combustion mixture comprising air and fuel and the spark-ignited internal combustion engine is configured to ignite the combustion mixture according to an ignition timing; and
the control system is configured to command a reduction to the fuel injected into the combustion chamber in response to the launch control entering the active mode and to reverse the commanded reduction of fuel in response to the launch control leaving the active mode.

15. The vehicle according to claim 14, wherein the control system is configured to initiate a delay of the ignition timing in response to the launch control entering the active mode and to bring forward the combustion mixture ignition in response to the launch control leaving the active mode.

16. The vehicle according to any preceding claim, wherein the vehicle comprises:
an exhaust system configured to convey exhaust gases and unburnt combustion mixture from the powertrain to the exterior of the vehicle; and
a turbocharger comprising a turbine and a compressor configured to compress air,
wherein the exhaust system comprises an exhaust manifold configured to convey exhaust gases and unburnt combustion mixture from the internal combustion engine towards the turbocharger and an intake manifold configured to convey compressed air from the turbocharger into the internal combustion engine.

17. The vehicle according to claim 16, wherein the internal combustion engine is configured to expel a more energetic mixture of exhaust gases and unburnt combustion mixture into the exhaust system during the active period.

18. The vehicle according to claims 16 or 17, wherein the powertrain comprises a throttle having a variable position for controlling the flow of the combustion mixture into the intake manifold and the operating conditions comprise the position of the throttle.

19. The vehicle according to claim 18, wherein under the second set of operating conditions, the throttle has a more open position than the throttle position under the first set of operating conditions.

20. The vehicle according to claim 18 or 19, wherein the control system is configured to cause the throttle to adopt a more open position in response to the launch control entering the active mode and to cause the throttle to adopt a more closed position in response to the launch control leaving the active mode.

21. The vehicle according to any of claims 16 to 20, wherein the exhaust system comprises:
a turbine exhaust configured to convey exhaust gases and unburnt combustion mixture from the turbine to the exterior of the vehicle; and
a wastegate pipe configured to convey exhaust gases and unburnt combustion mixture from the exhaust manifold to the turbine exhaust such that the exhaust gases and unburnt combustion mixture bypass the turbine,
wherein the wastegate pipe comprises a wastegate valve configure to control the flow of exhaust gases and unburnt combustion mixture from the exhaust manifold to the turbine exhaust.

22. The vehicle according to claim 21, wherein the operating conditions comprise the wastegate valve position and under the second set of operating conditions, the wastegate valve has a more closed position than the wastegate valve position under the first set of operating conditions.

23. The vehicle according to claim 21 or 22, wherein the control system is configured to cause the wastegate valve to adopt a more closed position in response to the launch control entering the active mode and to cause the wastegate valve to adopt a more open position in response to the launch control leaving the active mode.

24. The vehicle according to any preceding claim, wherein the control system is configured to respond to the launch control leaving the active mode by commanding both the electric motor and the internal combustion engine to output a positive torque.

25. A method performed by a control system of a vehicle, the vehicle comprising: a plurality of wheels; a powertrain for providing torque to a drive shaft coupled to at least one of the plurality of wheels, the powertrain comprising a spark-ignited internal combustion engine for igniting a volume of combustion mixture and an exhaust system arranged to convey exhaust gases and residual combustion mixture from the internal combustion engine; an electric motor; and a launch control having an inactive mode during which the powertrain operates under a first set of operating conditions and an active mode during which the powertrain operates under a second set of operating conditions, the method comprising:
receiving a first signal indicative of the launch control entering the active mode and in response to receiving the first signal, commanding the powertrain to operate under the second set of operating conditions in which:
the electric motor outputs a negative torque; and
the internal combustion engine outputs an augmented torque which counteracts the negative torque output by the electric motor such that the vehicle travels at a constant speed.

26. The method according to claim 25, wherein the method further comprises:
receiving a second signal indicative of the launch control leaving the active mode and in response to receiving the second signal, commanding the powertrain to operate under the first set of operating conditions and commanding both the electric motor and the internal combustion engine to output a positive torque.
